# EUROPEAN PATENT APPLICATION

(11) **EP 3 467 359 A1**
(43) Date of publication of application: **10.04.2019**
(21) Application number: 17748376.5
(22) Date of filing: 05.06.2017
(51) Int. Cl.: F16K 11/065

(54) **MULTIWAY GATE VALVE**

(30) Priority: 06.06.2016 BR 102016012918
(71) Applicant: FMC Technologies Do Brasil LTDA, 21941-615 Rio de Janeiro (BR)
(72) Inventor: ZARAGOZA LABES, Alan, 22776-070 Rio de Janeiro-RJ (BR); COUTO FILHO, Paulo Augusto, 22010-000 Rio de Janeiro (BR); SUN LAI, Huei, 20270-230 Rio de Janeiro (BR); DE ARAUJO BERNARDO, Leonardo, 20550-012 Rio de Janeiro (BR); GUEDES PORTO, Hugo, 22790-230 Rio de Janeiro (BR); PINHO ANTUNES, Sérgio Ricardo, 22290-000 Rio de Janeiro (BR); SAIORON BERNARDO, Renato, 20950-005 Rio de Janeiro (BR); GUÉRCIO FAÍSCA, André, 22790-702 Rio de Janeiro (BR); DA SILVA BONFIM, Jorge Luiz, 21210-110 Rio de Janeiro (BR)
(74) Representative: Santarelli
(86) International application number: PCT/BR2017/050143
(87) International publication number: WO 2017/210762

(57) **Abstract**

The present invention refers to a new structure of directional gate type block valve (10), having a concept in its geometry comprising a valve body (1), a gate type straddle (2), a transmission stem (3) and four seats (4) for process fluid sealing, wherein the transmission stem (3) drives the gate type straddle (2) allowing 3 position options for gate type straddle (2), directing or even completely sealing the system. This new structure of the geometry of directional gate type block valve provides the exploration system the simplification of using only one equipment for directing the process fluid, besides allowing its use in a wide range of permissible working pressures. Other advantages due to its simple geometry are given by the low cost of manufacture, assembly and test of the directional gate type block valve.

## Description

### Field of the Invention

The present invention refers to a directional gate type block valve to be advantageously applied in equipment of subsea systems where it is necessary to direct the production flow, as well as the total sealing of the paths in a determined position. Due to the great flexibility of using directional gate type valves, the present invention is not limited to the oil and gas area, having many other applications, subsea or of surface, present in the several engineering fields.

### Background of the Invention

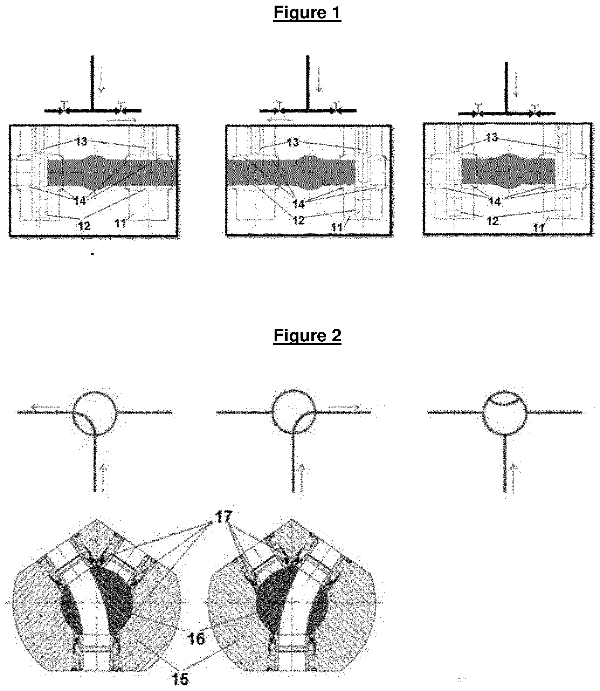

As well known by those skilled in the art, the conventional project of gate valve, here illustrated in Figure 1, comprises valve bodies (11), gate type straddle (12), stem (13) and seat (14). This type of valve structure is widely used in exploring oil fields where they are applied, for example, in wellheads or manifolds, in addition, obviously, to being widely used in projects above the surface. However, the use of two or more conventional gate type valves causes a significant impact on weight, size and number of pieces inside the subsea equipment, consequently, increasing the cost and manufacturing time, assembly and test thereof.

For targeting the production flow in the subsea equipment used in the oil and gas industry, generally it is used a ball type block valve, as that illustrated in the Figure 2, which comprises the valve bodies (15), ball type straddle (16) and seat (17). For this type of valve there are limitations inherent in its project, and, for this reason, they are not designed to work at high pressures, which generally reach 10,000 psi. Further, there are limitations regarding sealing in its interior part, generally having a leakage allowable by *ISO 5208* - *third edition* norm.

Another important factor is the high possibility of undesired communication between cavities, due to the high complexity degree of preparation and manufacturing of the ball as straddle. This fact, generally, gives the possibility of causing the communication of production fluids resulting from two cavities which should not get in contact with each other.

### Summary of the Invention

Therefore, it is the main object of the present invention to provide a directional gate type block valve whose sealing is superior compared to ball valves, which has greater resistance at high working pressures and results in the project simplification for only an equipment, reducing or eliminating valves deficiencies of the prior art, exposed above.

The present invention brings a new concept for using a gate type block valve that is directional, and comprises basically in a valve body, a gate type straddle, a transmission stem and four seats for process fluid sealing.

With this setting of the directional gate type block valve object of the present invention, the transmission stem may be used for moving the gate, allowing three different options for position thereof, directing the process fluid to the desired cavity, while keeping the other cavity tight, or even the total sealing of all system cavities.

Thus, it is noted that the valve, according to the present invention, simplifies subsea systems by using only one equipment for directing the process fluid, providing greater sealing capacity, reducing or even eliminating leakages, reducing costs of production, assembly and tests inherent to the projects directed to oil and gas area.

### Brief Description of the Figures

The directional gate type block valve according to the present invention may be well understood from the illustrative figures attached, which in a schematic and not limitative form of its scope represent:
- Figure 1 - Scheme of using two or more conventional gate type valves;
- Figure 2 - Ball type block valve typical of the prior art, illustrating in a simplified manner the process' fluids direction;
- Figure 3 - A first positioning option of the directional gate type block valve according to the present invention;
- Figure 4 - Flowchart regarding the first positioning option;
- Figure 5 - A second positioning option of the directional gate type block valve according to the present invention;
- Figure 6 - Flowchart regarding the second positioning option;
- Figure 7 - A third positioning option of the directional gate type block valve according to the present invention;
- Figure 8 - Flowchart regarding the third positioning option.

### Detailed Description of the Invention

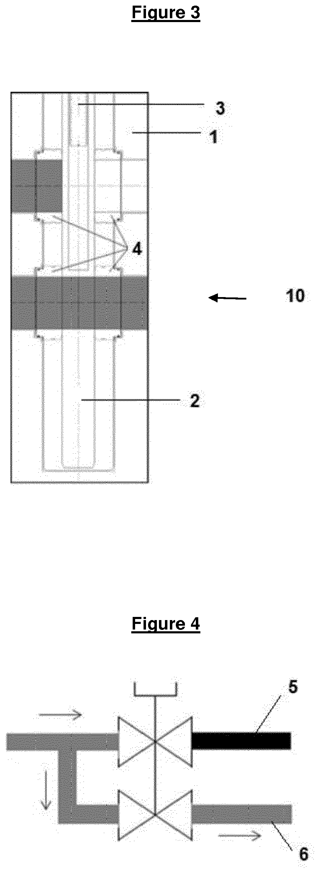

In a first aspect, according to Figure 3, the present invention provides a new geometry conception of directional gate type block valve (10), which comprises a valve body (1), a gate type straddle (2), a transmission stem (3) and four seats (4) for process fluid sealing.

Also, according to Figure 3, it is verified that the transmission stem (3) is used for moving the gate type straddle (2), wherein this last one is found in the first position, allowing the fluid path by the channel (5), leaving the channel (6) tight. This setting of the directional gate type block valve (10) is represented by the flowchart of the Figure 4.

The use of gate type valves, according to the present invention, represents greater reliability regarding the seal and the use in big pressures, of the 10000 psi order. In addition, this new setting of the gate valve of the present invention also allows a significant reduction in the project complexity, as well as its cost of production, assembly and test, when compared to the prior art exposed in the Figures 1 and 2 described above.

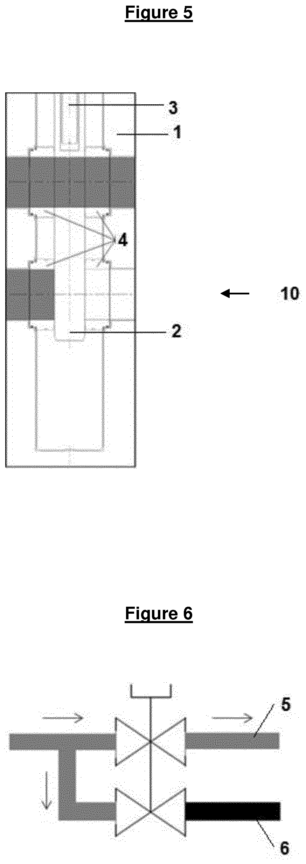

According to this aspect, the present invention further provides other two positions options of the gate type straddle (2), always being driven by the transmission stem (3). The second option is illustrated in the Figure 5, with its respective flowchart represented in the Figure 6. Here, it is noted that the gate type straddle (2), driven by the transmission stem (3), changes its position to invert the situation described in the Figures 3 and 4, releasing the fluid paths by the channel previously blocked (6) and blocking the fluid path by the channel previously released (5). The first and second possible positions of the directional gate type block valve (10), as illustrated in the Figures 3 and 5 with their flowcharts represented in the Figures 4 and 6, respectively, are responsible for directing the fluid between two cavities, keeping the third one totally tight.

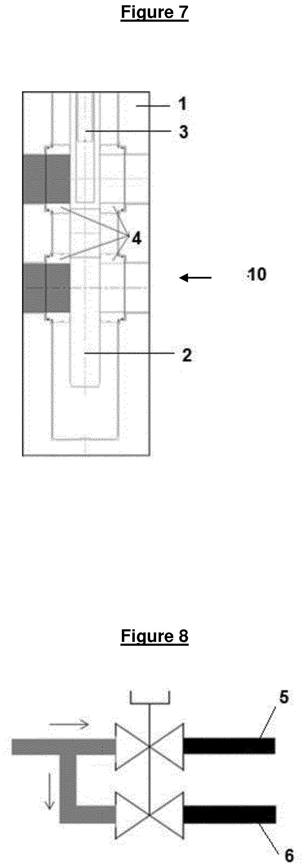

The third possible option of the directional gate type block valve (10), according to the present invention, is illustrated in the Figure 7, with its respective flowchart illustrated in the Figure 8. In this setting, are kept the three cavities tight, not having communication between them, without fluid paths by the channels (5) and (6).

Thus, according to the exposed above, it will be clear to any person skilled in the art the new conception advantages of the directional gate type block valve (10) object of the present invention. Among these advantages, we may mention the subsea systems, simplification due to the use of only one equipment for directing the process fluid, where generally two or more equipment would be used. Further, we also may mention that for sealing effects, the directional gate type block valve (10) may be used for working with low pressures, lower than 300 psi, or high pressures that may reach up to 10000 psi, besides allowing an increased amount of operation cycles and lifetime compatible with the minimum requirements for use in subsea oil fields or deep water work, such as those up to 3000 m.

The directional gate type block valve (10), according to the present invention, was designed for use in subsea equipment, however, considering the numerous technical and economic advantages offered by it, and the wide range of permissible operating pressures, this would not be the only possible application and could be extended to any system that requires fluid sealing and directing, either on the surface or below the water slide, in the oil and gas area or in any engineering field.

## Claims

1. Directional gate type block valve, **characterized in that** its basic geometry comprises a valve body (1), a gate type straddle (2), a transmission stem (3) and four seats (4) for process fluid sealing;

2. Directional gate type block valve, according to claim 1, **characterized in that** it provides its use for only one subsea equipment;

3. Directional gate type block valve, according to the preceding claims, **characterized in that** the transmission rod (3) drives the gate type straddle (2) for allowing three positions settings of the gate type straddle (2);

4. Directional gate type block valve, according to the preceding claims, **characterized in that** the first position option of the gate type straddle (2) allows the fluid path in the channel (5), leaving the channel (6) tight.

5. Directional gate type block valve, according to claims 1 to 3, **characterized in that** a second position option of the gate type straddle (2) allows the fluid path in the channel (6), leaving the channel (5) tight.

6. Directional gate type block valve, according to claims 1 to 3, **characterized in that** a third position option of the gate type straddle (2) allows the stagnation of both channels (5) and (6), achieving of total sealing the system.

7. Directional gate type block valve, according to the preceding claims, **characterized in that** it is applicable in subsea equipment to perform the process' fluids direction, as well as a possible total sealing.

8. Directional gate type block valve, according to claims 1 to 6, **characterized in that** it is proper for working in deep waters, about up to 3000 m.
